# FASCICULE DE BREVET EUROPEEN

(11) **EP 1 116 826 B1**
(45) Date de publication et mention de la délivrance du brevet: **06.04.2005**
(21) Numéro de dépôt: 01400034.3
(22) Date de dépôt: 09.01.2001
(51) Int. Cl.: E01B 9/18, F16B 13/00

(54) **Cheville d'ancrage pour fixation dans un élément en béton**
Verankerungsdübel für die Verankerung in einem Betonkörper
Anchoring dowel for fixation in a concrete body

(30) Priorité: 10.01.2000 FR 0000217; 06.03.2000 FR 0002843
(43) Date de publication de la demande: 18.07.2001
(73) Titulaire: ARS Industries, 57130 Ars sur Moselle (FR)
(72) Inventeur: Potvin, Rodolphe, 57000 Metz (FR)
(74) Mandataire: Robert, Jean-Pierre

(56) Documents cités:
- EP-A- 0 462 436
- DE-U- 9 003 797

## Description

L'invention concerne une cheville d'ancrage pour fixation dans un élément en béton.

Les chevilles ou gaines d'ancrage d'une fixation à vis dans un élément de structure en béton sont bien connues, notamment dans leur application à la fixation de rails sur des traverses en béton.

Une telle cheville se présente sous la forme d'un manchon sensiblement cylindrique dont l'évidemment intérieur est borgne et taraudé pour recevoir la vis tandis que sa surface extérieure est pourvue de reliefs qui coopèrent à son ancrage dans le béton (soit au moment de la fabrication de l'élément de structure, soit par scellement ou collage ultérieur dans un logement ou une réserve de ce dernier) pour résister aux efforts de descellement axiaux ou en rotation.

Ces dispositifs sont livrés avec un bouchon à l'extrémité ouverte du trou borgne de manière à éviter la pénétration d'eau ou d'un corps étranger dans la cheville qui formerait une résistance au vissage d'un tire-fond.

Cependant, de tels bouchons ne sont pas suffisamment étanches pour empêcher une accumulation d'eau au fond du trou borgne. Cette eau, si elle gèle, peut former un corps étranger se comportant exactement comme un gravillon qui, comprimé par le tire-fond, conduira à la détérioration de la cheville donc des qualités de l'ancrage. En outre, l'eau accumulée au fond de la cheville, ne gène pas la mise en place du tire-fond. En effet, en fin de vissage, l'eau comprimée par le tire-fond fuit le long des filets, sans toutefois être totalement évacuée. Il reste donc toujours une quantité résiduelle d'eau au fond de la cheville qui, si elle gèle, se dilate et provoque la fissuration de la cheville.

Des solutions ont déjà été proposées pour résoudre ce problème. L'une d'elles consiste à prévoir un remplissage partiel du fond de l'orifice borgne par un matériau destructible (par dissolution notamment) qui ménage un volume de réserve pour un corps étranger. Ce volume est placé sous l'extrémité du tire-fond lorsque celui-ci est vissé au fond de la cheville. Cette disposition n'est cependant pas satisfaisante car il est impossible de détruire le matériau en question si un bouchon de glace le recouvre. On a également proposé des chevilles remplies plus ou moins complètement de graisse ou de matériau visqueux incompressible (par exemple EP-A-0 462 436) pour être certain d'empêcher l'accumulation d'eau. L'inconvénient de ce remplissage réside dans le fait qu'au moment de la mise en place du tire-fond, cette graisse déborde largement sous la tête de celui-ci, se répand sur les éléments assemblés et souille l'environnement de travail du monteur qui s'en plaint.

Une autre solution enseignée dans le document DE-U-9 003 797 consiste à équiper la cheville d'un capot rapporté extérieurement dans le prolongement de celle-ci, ce capot définissant entre son fond et celui de la cheville un compartiment pour recevoir un corps étranger se trouvant dans la cheville, et forcé au travers du fond par vissage d'un tire-fond. Ce procédé peut conduire à l'endommagement de la cheville.

Un autre type de solution, par exemple illustrée dans le document US-A-5 740 651, consiste à percer le fond de la cheville pour laisser passer l'eau, le fond étant percé soit par forage, soit par dissolution du fond. Ce procédé est peu pratique, car il nécessite une opération additionnelle réclamant du temps et des outillages. En outre, l'installation de la cheville suppose de prévoir un canal de passage de l'eau ainsi évacuée dans l'élément en béton qui reçoit la cheville

Pour compléter l'arrière-plan technologique de l'invention, on pourra se référer aux documents FR-A-2 425 014, FR-A-2 332 368, ou encore DD-A-228 846.

La présente invention est une autre réponse à cette question.

Selon l'invention, l'extrémité fermée de l'orifice borgne est pourvue d'un élément élastique délimitant un volume de réserve avec le fond du trou borgne et exerçant une action s'opposant à la pénétration d'un corps étranger dans ce volume.

Si un tel corps étranger (gravillon, eau d'infiltration solidifiée...) est présent dans la cheville, celui-ci est maintenu hors du volume de réserve par l'élément élastique. Sous l'effort de pression exercé par un tire-fond vissé dans la cheville, le corps étranger sollicite l'élément élastique qui s'efface progressivement pour permettre la pénétration au moins partielle du volume de réserve par le corps étranger. On évite ainsi de créer des contraintes importantes sur les parois ou le fond de la cheville, qui conduiraient à son endommagement.

Si ce corps étranger est un liquide, alors l'action de l'élément élastique fera remonter au moins une partie de ce liquide le long des filets. La partie de ce liquide restante en fond de cheville pourra geler et donc augmenter de volume à l'encontre du moyen élastique, sans créer de contraintes importantes sur les parois ou le fond de la cheville

Selon un premier mode de réalisation de l'invention, l'élément élastique est un double fond en matériau souple et élastique délimitant avec le fond un compartiment étanche.

Le compartiment étanche constitue le volume de réserve nécessaire au logement de tout corps étranger qui pourrait être situé au-dessus de la paroi supérieure de ce compartiment. Ce corps en effet serait forcé sans donner naissance à des contraintes importantes dans ce volume de réserve en déformant cette paroi supérieure élastique. L'étanchéité de ce compartiment est la garantie qu'il ne soit pas intempestivement occupé par de l'eau d'infiltration.

De manière préférée, pour justement garantir cette étanchéité, le double fond rapporté dans l'orifice se présente sous la forme d'un bouchon avec une paroi transversale et une jupe périphérique logée serrée dans une gorge annulaire périphérique du fond.

Selon un second mode de réalisation, l'extrémité fermée de l'orifice borgne est remplie d'un matériau alvéolaire dont au moins 90% des cellules sont fermées sur une hauteur axiale suffisante pour prendre en compte la dispersion des dimensions axiales des tire-fonds résultant de leur tolérance de fabrication.

Un matériau alvéolaire de ce type est fabriqué et mis sur le marché par la société RACLOT et Cie sous la référence C.6.

Il s'agit d'une mousse semi-spongieuse qui présente l'avantage, par rapport à un matériau à 100% de cellules fermées d'être compressible à au moins 50% de son volume en conservant la possibilité de recouvrer près de 95% de son volume initial, alors que les mousses à cellules fermées perdent leur qualité élastique après avoir subi une compression de 20 à 30%.

Le rôle d'un tel remplissage est tout d'abord de confiner l'eau présente dans la cheville dans un volume de celle-ci qui, à la mise en place du tire-fond, sera totalement occupé par ce dernier. Ainsi lors de la mise en place du tire-fond, l'eau surmontant la mousse est repoussée en direction de celle-ci par le tire-fond et comprime la mousse. Cette dernière agit élastiquement comme un piston qui s'efface par compression tout en forçant l'eau à remonter dans la cheville le long des filets. Il existe en effet un jeu hélicoïdal entre le flanc arrière du filet du tire-fond et le flanc correspondant du filet de la cheville par lequel, sous l'effet de la poussée de la mousse tendant à reprendre sa forme l'eau est expulsée.

Ainsi petit à petit, il s'opère une purge du fond de cheville à mesure que la mousse recouvre son volume initial.

Par ce moyen, on est parvenu à expulser la plus grande partie de l'eau qui pouvait être contenue dans la cheville de sorte qu'en service, en cas de gel, le peu d'eau résiduelle encore présente en fond de cheville (dans les 5 à 10% de cellules ouvertes de la mousse) et le long de filets, qui se transforme en glace, ne crée aucun dommage à la cheville.

D'autres caractéristiques et avantages de l'invention apparaîtront plus clairement à la lumière de la description qui suit de modes de réalisation particuliers non limitatifs de l'invention, en référence aux dessins et aux figures parmi lesquelles
- la figure 1 est une vue en demi-coupe longitudinale d'une cheville selon un premier mode de réalisation de l'invention ;
- la figure 2 est une vue agrandie d'une variante de réalisation de la cheville précédente ;
- la figure 3 est une vue en coupe partielle d'une cheville selon un second mode de réalisation de l'invention ;
- la figure 4 est une vue similaire à la figure 3 d'une cheville équipée d'un tire-fond au moment de la mise en place de ce dernier, en présence d'eau dans la cheville;
- la figure 5 est une vue similaire à la figure 4 alors que l'assemblage est dans son état de service.

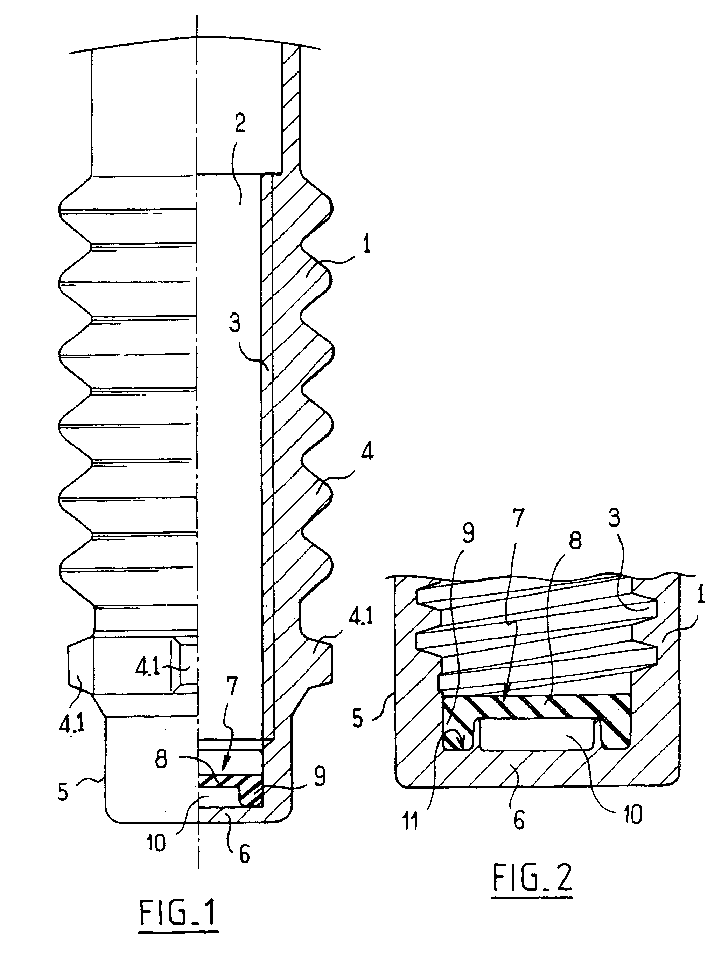

La cheville représentée aux figures 1 et 2 comporte de manière traditionnelle un manchon en matière plastique 1 pourvu d'un orifice borgne 2 avec un filet intérieur 3 et, à l'extérieur, des reliefs annulaires 4 et des reliefs anti-rotation 4.1. L'extrémité 5 borgne de l'orifice 2 est lisse et est fermée par une cloison 6.

La cloison 6 est surmontée par un élément élastique, ici un double fond 7 formant un bouchon en caoutchouc ou élastomère de synthèse. Ce double fond 7 comporte en réalité une cloison transversale 8 et une jupe périphérique 9 dont le contact avec la surface interne de la paroi lisse de l'extrémité 5 de l'orifice 2 assure l'étanchéité du compartiment 10, qui est délimitée par cette cloison 8 et la cloison 6 de la cheville 1.

A la figure 2, on remarque que la jupe 9 de cet insert élastomère 7 pénètre à l'intérieur d'une gorge 11 qui est ménagée dans la cloison 6 de la cheville 1, cette gorge coopérant à un meilleur maintien de la jupe 9 qui y est logée légèrement à force et à une meilleure étanchéité du compartiment 10 vis-à-vis du reste de l'orifice 2.

On comprend que si un gravillon se trouve à l'intérieur de l'orifice 2, lorsqu'on visse un tire-fond sur le filet 3, en fond de vissage, le gravillon appuie sur la paroi 8 en la déformant, ce qui est possible grâce à la présence du compartiment 10 qui constitue le volume de réserve selon l'invention. De la même manière, s'il existe de l'eau résiduelle au-dessus du double fond 7 et qu'un tire-fond équipe la cheville, l'eau résiduelle emprisonnée déforme la cloison 8 sous l'action du tire-fond. En outre si cette eau vient à geler, la cloison 8 peut s'enfoncer encore plus dans le compartiment à vis pour prendre en compte l'augmentation de volume de cette eau.

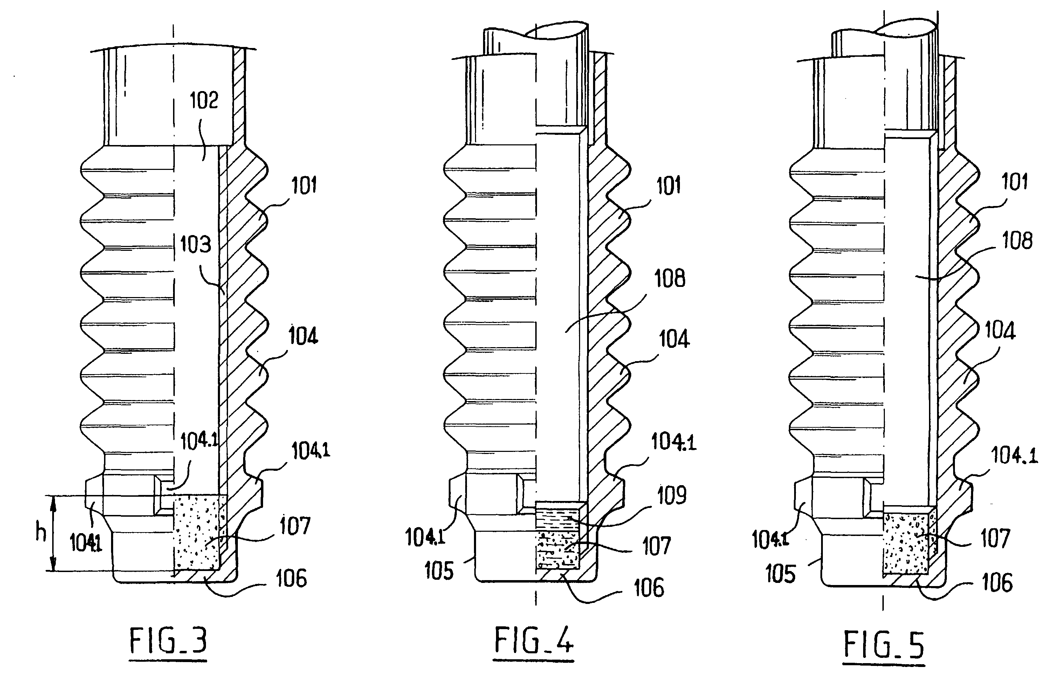

Les figures 3,4 et 5 sont relatives à un second mode de réalisation de l'invention. La cheville ou cheville comporte de manière traditionnelle un manchon en matière plastique pourvu d'un orifice borgne 102 avec un filet intérieur 103 et, à l'extérieur des reliefs annulaires 104 et des reliefs anti-rotation 104.1. L'extrémité 105 borgne de l'orifice 102 est lisse et est fermée par une cloison 106.

La cloison 106 est surmontée par un tampon 107 en mousse semi-spongieuse qui a été logé à force dans l'orifice 102, le volume occupé par ce tampon formant le volume de réserve selon l'invention. A l'état libre, la hauteur h sur laquelle la mousse remplit l'orifice à partir de la cloison inférieure 106 est déterminée pour que, quelle que soit la longueur d'un tire-fond (dont les tolérances de fabrication conduisent sur la longueur à une dispersion importante de dimensions) il parvienne, une fois mis en place dans la cheville, au contact de la mousse.

Cette mousse est du type semi-spongieux avec une majorité importante de cellules fermées. Elle n'absorbe qu'environ 5 à 10% de son volume en eau. Elle est élastique et recouvre son volume initial même après une compression importante (supérieure à 50%) et prolongée.

Sa mise en place dans la cheville est mécanique (introduction d'un tampon) et elle demeure au fond de l'orifice par son accrochage élastique aux parois de celui-ci notamment en pénétrant dans les filets 103.

A la mise en place d'un tire-fond, il peut y avoir une accumulation d'eau au dessus de la mousse. L'extrémité du tire-fond 108 déplace cette quantité d'eau, lors de la fin de son vissage, vers le bas en comprimant la mousse 107 comme illustré par la figure 4. Le pouvoir élastique de cette mousse exerce sur la poche d'eau une pression qui la force à fuir le long du jeu hélicoïdal existant à l'arrière des filets d'un tire-fond, entre ceux-ci et ceux de la cheville. Ainsi l'état final atteint par l'assemblage est celui de la figure 5 où il n'existe plus d'eau susceptible d'endommager la cheville et le béton environnant en cas de gel.

L'invention n'est pas limitée au mode particulier de réalisation qui vient d'être décrit, mais bien au contraire entend couvrir toute variante qui reproduit l'invention telle que délimitée par les revendications.

## Revendications

1. Cheville d'ancrage destinée à recevoir un tire-fond et à être placée et scellée dans un élément de construction en béton, comportant un corps (1;101) en matière synthétique qui présente un orifice longitudinal (2;102) borgne fileté intérieurement (3;103) et extérieurement des reliefs d'ancrage (4;104) dans l'élément de construction, **caractérisée en ce que** l'extrémité (5;105) fermée de l'orifice borgne est pourvue d'un élément élastique (7;107) délimitant un volume de réserve avec le fond (6) du trou borgne et exerçant une action s'opposant à la pénétration d'un corps étranger à ce volume.

2. Cheville d'ancrage selon la revendication 1, **caractérisée en ce que** l'élément élastique est un double fond (7) en matériau souple et élastique délimitant avec le fond (6) un compartiment (10) étanche.

3. Cheville selon la revendication 2, **caractérisée en ce que** le double fond (7) rapporté dans l'orifice (2) se présente sous la forme d'un bouchon avec une paroi transversale (7) et une jupe périphérique (9) logée serrée dans une gorge (11) annulaire périphérique de la paroi de fond (6).

4. Cheville d'ancrage selon la revendication 1, **caractérisée en ce que** l'élément élastique est un tampon intérieur (107) en matériau cellulaire semi-spongieux logé en fond d'orifice (102).

5. Cheville selon la revendication 4, **caractérisée en ce que** le tampon (107) s'étend à partir d'une cloison (106) fermant l'orifice (102) de la cheville pour parvenir, dans l'état de service, au contact d'un tire-fond (108) mis en place dans la cheville.

## Patentansprüche

1. Verankerungsdübel, der bestimmt ist, eine Ankerschraube aufzunehmen und in einem Konstruktionselement aus Beton angeordnet und eingemauert zu werden, umfassend einen aus Kunststoff bestehenden Körper (1; 101), der innen ein längliches Blindloch (2; 102) mit Gewinde und außen Erhebungen (4; 104) zur Verankerung in dem Konstruktionselement hat, **dadurch gekennzeichnet, dass** das geschlossene Ende (5; 105) des Blindlochs mit einem elastischen Element (7; 107) versehen ist, das mit dem Boden (6) des Blindlochs ein Überschussvolumen begrenzt und dem Eindringen eines Fremdkörpers in dieses Volumen entgegenwirkt.

2. Verankerungsdübel nach Anspruch 1, **dadurch gekennzeichnet, dass** das elastische Element ein aus einem biegsamen und elastischen Material bestehender Doppelboden (7) ist, der mit dem Boden (6) eine abgedichtete Kammer (10) begrenzt.

3. Dübel nach Anspruch 2, **dadurch gekennzeichnet, dass** der in das Loch (2) eingesetzte Doppelboden (7) die Form einer Verschlusskappe mit einer quer verlaufenden Wand (7) und einer Randschürze (9) hat, die eng anliegend in einer ringförmigen Randkehle (11) der Wand des Bodens (6) aufgenommen ist.

4. Verankerungsdübel nach Anspruch 1, **dadurch gekennzeichnet, dass** das elastische Element ein innerer, aus einem zellularen, halbschwammigen Material bestehender Puffer (107) ist, der am Boden der Öffnung (102) aufgenommen ist.

5. Dübel nach Anspruch 4, **dadurch gekennzeichnet, dass** das Puffers (107) von einer das Loch (102) der Dübel verschliessenden Wand (105) so streckt, dass das Puffer, in Betriebzustand, in Kontact mit einer Ankerschraube (108), wenn sie in der Dübel eingesetzt ist, liegt.

## Claims

1. An anchoring plug for receiving a bolt and for being placed and sealed in a structural element made of concrete, the plug comprising a body (1; 101) made of synthetic material which presents a blind longitudinal orifice (2; 102) that is internally tapped (3; 103), and on the outside presents anchoring portions (4; 104) in relief for anchoring in the structural element, the plug being **characterized in that** the closed end (5; 105) of the blind orifice is provided with an elastic element (7; 107) co-operating with the bottom (6) of the blind hole to define a reserve volume and acting to oppose penetration of a foreign body into said volume.

2. An anchoring plug according to claim 1, **characterized in that** the elastic element is a double bottom (7) of flexible and elastic material co-operating with the bottom (6) to define a leaktight compartment (10).

3. A plug according to claim 2, **characterized in that** the double bottom (7) fitted in the orifice (2) is in the form of a stopper comprising a transverse wall (7) and a peripheral skirt (9) received tightly in an annular peripheral groove (11) of the bottom wall (6).

4. An anchoring plug according to claim 1, **characterized in that** the elastic element is an internal pad (107) made of semi-sponge cellular material received in the bottom of the orifice (102).

5. A plug according to claim 4, **characterized in that** the pad (107) extends from a partition (106) closing the orifice (102) of the plug for coming, in service-state, into contact with a bolt (108) put into place in the plug.
